# EUROPÄISCHE PATENTANMELDUNG

(11) **EP 4 527 172 A1**
(43) Veröffentlichungstag der Anmeldung: **26.03.2025**
(21) Anmeldenummer: 24190284.0
(22) Anmeldetag: 23.07.2024
(51) Int. Cl.: A01B 69/04

(54) **ASSISTENZSYSTEM ZUR GENERIERUNG VON FAHRTROUTEN**

(30) Priorität: 20.09.2023 DE 102023125513
(71) Anmelder: CLAAS E-Systems GmbH, 49201 Dissen (DE)
(72) Erfinder: Redenius, Jannik, 32361 Pr. Oldendorf (DE); Speer, Christian, 78267 Aach (DE); Behmenburg, Jan, 58730 Fröndenberg (DE); Korthals, Timo, 33818 Leopoldshöhe (DE); Bone, Sven, 49124 Georgsmarienhütte (DE); Fischer, Josef, 88400 Biberach (DE); Verploegen, Martin Jan Joseph, 40625 Düsseldorf (DE)
(74) Vertreter: CLAAS Gruppe

(57) **Zusammenfassung**

In einem Assistenzsystem zur Generierung von Fahrrouten für eine oder mehrere fahrergelenkte oder autonome landwirtschaftliche Arbeitsmaschinen, ist ein Rechner (1) eingerichtet, eine Fahrtroute für eine Arbeitsmaschine (4) zur Bearbeitung einer landwirtschaftlichen Fläche (6) auf der Grundlage einer hinterlegten Strategie zu erstellen, welche Eigenschaften von an die landwirtschaftliche Fläche (6) angrenzenden, nicht zu bearbeitenden Flächenstücken (7-11) berücksichtigt.

## Beschreibung

Die vorliegende Erfindung betrifft ein Assistenzsystem zur Generierung von Fahrtrouten für eine oder mehrere landwirtschaftliche Arbeitsmaschinen auf einer zu bearbeitenden landwirtschaftlichen Fläche wie etwa einer zu mähenden Wiese oder einem abzuerntenden Feld.

Heutige Routenplanung für die Bearbeitung von landwirtschaftlichen Flächen durch autonome oder hochautomatisierte Maschinen zielt immer auf eine möglichst effiziente, d.h. kurze Route ab. Wildtiere, die sich im zu bearbeitenden Pflanzenbestand aufhalten, reagieren je nach Art und Alter unterschiedlich auf den Maschineneinsatz. Doch auch wenn ein Wildtier versucht, der arbeitenden Maschine auszuweichen, besteht eine hohe Wahrscheinlichkeit, dass es auf der zu bearbeitenden Fläche bleibt, wenn es, um von dieser zu fliehen, zum Verlassen der Deckung im Pflanzenbestand gezwungen wäre. Es besteht daher eine im Laufe der Bearbeitung zunehmende Gefahr, dass ein solches Tier im Kontakt mit der Maschine verletzt oder getötet wird.

EP 3 414 982 B1 beschreibt ein Verfahren zum Steuern einer landwirtschaftlichen Arbeitsmaschine, bei dem eine Flugdrohne der Arbeitsmaschine vorausfliegt, um eine von der Arbeitsmaschine zu befahrende Fahrgasse auf die Anwesenheit von Tieren zu überwachen, und bei Erfassung eines Tiers eine kollisionsvermeidende Maßnahme eingeleitet wird. Diese Technik kann zwar helfen, Jungtiere zu schützen, die einer Gefahr durch Kauern am Boden zu entkommen versuchen, oder bodenbrütende Vögel zu schützen, sie ist jedoch nur eingeschränkt wirksam im Falle von Tieren, die einer Gefahr auszuweichen versuchen und eine kollisionsvermeidende Maßnahme durch unvorhergesehene Eigenbewegungen konterkarieren. Insbesondere kann sie nur eingeschränkt verhindern, dass Tiere, die zwar auszuweichen versuchen, aber keinen geeigneten Ort zum Ausweichen finden, in Kontakt mit der Maschine geraten.

Eine Aufgabe der Erfindung ist, ein Assistenzsystem für ein oder mehrere landwirtschaftliche Arbeitsmaschinen bereitzustellen, das in der Lage ist, die Gefährdung auch von einer Gefährdung eventuell ausweichenden Tieren durch den Einsatz der Maschinen zu minimieren.

Die Aufgabe wird gelöst durch ein Assistenzsystem zur Generierung von Fahrrouten für eine oder mehrere autonome landwirtschaftliche Arbeitsmaschinen, bei dem ein Rechner eingerichtet ist, eine Fahrtroute für jede der Arbeitsmaschinen zur Bearbeitung einer landwirtschaftlichen Fläche auf der Grundlage einer hinterlegten Strategie zu erstellen, welche direkte Umgebungsdaten der landwirtschaftlichen Fläche berücksichtigt.

Die direkten Umgebungsdaten können insbesondere Eigenschaften von an die landwirtschaftliche Fläche angrenzenden Flächenstücken betreffen.

Die berücksichtigten Eigenschaften sollten repräsentativ sein für die Eignung von angrenzenden Flächenstücken, als Fluchtziel eines sich auf der landwirtschaftlichen Fläche aufhaltenden Tiers zu dienen. Da die Bereitschaft eines Tiers, in eine bestimmte Richtung zu fliehen, von der Eignung eines in dieser Richtung gelegenen Flächenstücks als Ziel seiner Flucht abhängen wird, kann so das Verhalten des Tiers mit einer gewissen Wahrscheinlichkeit vorhergesagt und in die Routenplanung einbezogen werden.

Die von dem Assistenzsystem untersuchten Flächenstücke sollten jeweils in einer berücksichtigten Eigenschaft homogen sein. So kann beispielsweise ein Flächenstück Wald, ein anderes Wiese, ein weiteres ein Acker mit einer ersten Feldfrucht und noch ein weiteres ein Acker mit einer zweiten Feldfrucht sein. Indem sich die Flächenstücke in Höhe, Dichte oder Attraktivität als Futter unterscheiden, stellen sie jeweils unterschiedlich attraktive Fluchtziele dar.

Die Flächenstücke sollten wenigstens zur Zeit der Bearbeitung nicht von der Maschine befahrbar sein. Permanent nicht befahrbar ist insbesondere ein Waldstück; als zeitweilig nicht befahrbar gelten kann eine landwirtschaftliche Fläche, deren Erntezeitpunkt noch nicht gekommen ist, oder die bereits früher beerntet worden ist.

Der Rechner kann eingerichtet sein, die direkten Umgebungsdaten, insbesondere dieEigenschaften der an die landwirtschaftliche Fläche angrenzenden Flächenstücke, von einem Benutzer und/oder von einer Datenbank abzufragen. Die Datenbank kann eine öffentlich zugängliche kartographische Datenbank sein, die Angaben zur Art der Bodennutzung bereitstellt, detailliertere Angaben zu den Nutzflächen eines einzelnen landwirtschaftlichen Betriebs, etwa zum Pflanzenbestand auf einem an die zu bearbeitende Fläche angrenzenden Flächenstück und zu dessen Entwicklungsgrad, können in einer betriebsinternen Datenbank verfügbar sein. Die Abfrage vom Benutzer ermöglicht die Berücksichtigung veränderlicher und in der Datenbank nicht verfügbarer Eigenschaften; so etwa ob ein benachbartes Flächenstück bereits abgeerntet ist oder nicht.

Während Angaben zur geographischen Position und zum Umriss eines zur zu bearbeitenden Fläche benachbarten Flächenstücks in einer Datenbank, die das Flächenstück verzeichnet, unproblematisch zu ermitteln sind, ist es für einen Benutzer oft schwierig, entsprechende Angaben zu liefern. Deshalb kann eine Benutzerschnittstelle eingerichtet sein, von einem Benutzer - sofern das Flächenstück als Fluchtziel in Betracht kommt - anstelle dieser Angaben eine Eingabe einer erwarteten Fluchtrichtung zu dem Flächenstück zu akzeptieren.

Um je nach Art und Entwicklungsstadium unterschiedlichem Verhalten von Tieren Rechnung zu tragen, kann der Rechner eingerichtet sein, die für die Generierung der Fahrroute zu verwendende Strategie unter mehreren hinterlegten Strategien anhand der Jahreszeit und/oder anhand einer zu schützenden Tierart auszuwählen. Ein weiteres Kriterium für die Auswahl einer Strategie kann die Größe der zu bearbeitenden Fläche sein.

Eine Strategie kann insbesondere vorsehen, dass ein Teil der landwirtschaftlichen Fläche, der an ein als Deckung oder Fluchtmöglichkeit geeignetes Flächenstück angrenzt, später bearbeitet wird als ein von diesem Flächenstück entfernter Teil der landwirtschaftlichen Fläche. So werden Tiere, die sich auf der Fläche aufhalten, im Laufe der Bearbeitung kontinuierlich in Richtung des als Deckung oder Fluchtmöglichkeit geeigneten Flächenstücks abgedrängt und können dort problemlos Zuflucht suchen, wenn ihnen die Maschine zu nahe kommt.

Auf großen Flächen oder wenn die Tiere gezielt zu einem bestimmten als Deckung oder Fluchtmöglichkeit geeigneten Flächenstück abgedrängt werden sollen, kann die Strategie vorsehen, dass ein zentraler Teil der landwirtschaftlichen Fläche, der an das als Deckung oder Fluchtmöglichkeit geeignetes Flächenstück angrenzt, später bearbeitet wird als den zentralen Teil flankierende Randteile der landwirtschaftlichen Fläche. So können Tiere beim Bearbeiten der Randteile zunächst in den zentralen Teil abgedrängt werden; von dort aus bleibt ihnen, wenn der später der zentrale Bereich bearbeitet wird, weiterhin die Fluchtmöglichkeit in das an den zentralen Bereich angrenzende Flächenstück, nicht aber in Flächenstücke, die nur über die bereits bearbeiteten und keine Deckung mehr bietenden Randteile erreichbar sind.

Um den Weg, den ein Tier fliehen muss, um sich vor der Maschine in Sicherheit zu bringen, möglichst kurz zu halten, kann eine Strategie auch vorsehen, einen zentralen Teil der landwirtschaftlichen Fläche früher zu bearbeiten als zwei an den zentralen Teil beiderseits angrenzende Teile.

Um ein Tier einerseits in Richtung einer geeigneten Zuflucht zu drängen und andererseits ihm genügend Zeit zum Ausweichen zu geben, kann eine hinterlegte Strategie vorsehen, eine Fahrtroute überwiegend parallel zu einem Rand der landwirtschaftlichen Fläche zu führen, an den ein als Deckung oder Fluchtmöglichkeit geeignetes Flächenstück angrenzt.

Insbesondere bei einer nicht autonomen oder zumindest nicht autonom betriebenen Maschine kann die Benutzerschnittstelle eingerichtet sein, einem Benutzer die von dem Rechner erstellte Fahrtroute anzuzeigen. Dem Benutzer kann zweckmäßigerweise auch die Möglichkeit geboten werden, die angezeigte Fahrtroute zu editieren; so können auch Randbedingungen berücksichtigt werden, zu denen dem Rechner keine Daten vorlagen.

Gegenstand der Erfindung ist ferner eine Landmaschine mit einer fahrbaren Basiseinheit und einem Maispflücker wie oben beschrieben, bei der die Antriebswelle der wenigstens einen Getriebeeinheit an einen Abtriebsanschluss, z.B. eine Zapfwelle, der Basiseinheit gekoppelt ist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein Blockdiagramm des Assistenzsystems;
- Fig. 2a und b: eine erste exemplarische Anwendungssituation des Assistenzsystems; und
- Fig. 3a und b: eine zweite exemplarische Anwendungssituation.

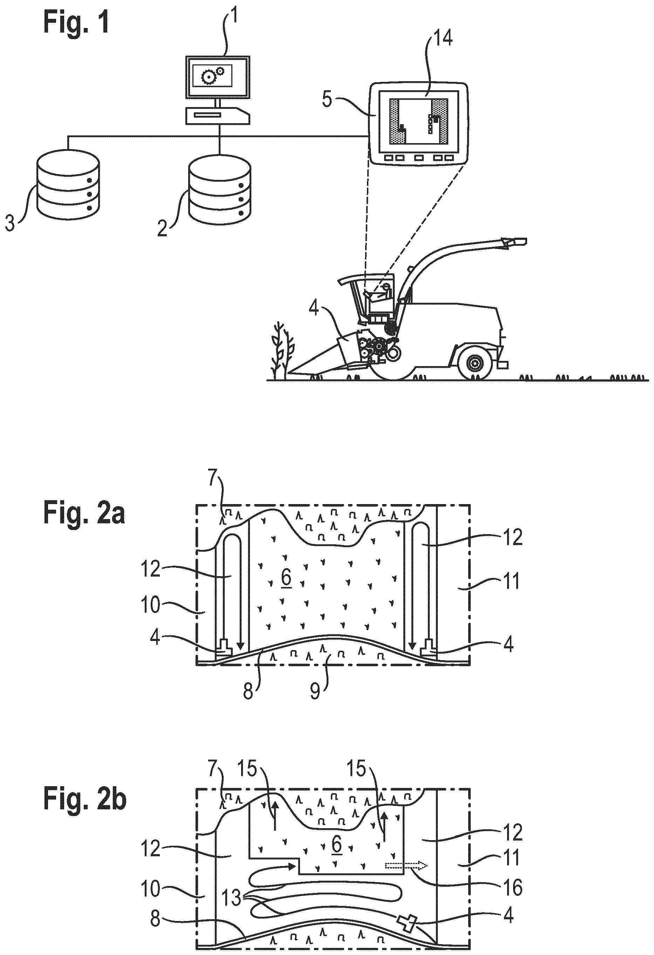

Fig. 1 zeigt ein Assistenzsystem mit einem Rechner 1 und Datenbanken 2, 3, mit denen der Rechner kommuniziert. Der Rechner 1 kann zentralisiert sein, z.B. in Form eines stationären Computers eines landwirtschaftlichen Betriebs, er kann als Netzwerk mehrerer Computer implementiert sein, z.B. unter Einbeziehung von Bordcomputern 5 von landwirtschaftlichen Arbeitsmaschinen 4 des Betriebs, oder er kann auf einem solchen Bordcomputer allein lokalisiert sein.

Die Datenbank 2 ist eine Referenzdatenbank, die agronomische Daten, insbesondere Daten zu Bodenbeschaffenheit, Bestand, Ertrag, und geografische Daten zu den landwirtschaftlichen Flächen des Betriebes speichert, eventuell auch Angaben zu auf den Flächen in der Vergangenheit beobachteten Tieren. Die geografischen Daten definieren Koordinaten des Grenzverlaufs jeder Fläche, sowie von möglichen Einstiegsstellen, an denen eine Maschine auf die Fläche gelangen oder sie wieder verlassen kann.

Die Datenbank 3 ist eine öffentliche, z.B. per Internet zugängliche Datenbank, auf der flächendeckend geographische Daten abfragbar sind, insbesondere auch zu Flächenstücken, die, z.B. weil sie nicht zu dem landwirtschaftlichen Betrieb gehören, nicht in der Referenzdatenbank 2 verzeichnet sind.

Wenn auf einer landwirtschaftlichen Fläche 6 des Betriebs eine Bearbeitung ansteht, plant der Rechner 1 unter Zugrundelegung von in den Datenbanken 2, 3 zu der Fläche 6 und angrenzenden Flächenstücken 7, 8, 9 verfügbarer Information Fahrtrouten für ein oder mehrere and der Bearbeitung beteiligte Arbeitsmaschinen.

Zu diesem Zweck sind mehrere Planungsstrategien in einer Programmbibliothek des Rechners 1 hinterlegt, typischerweise wenigstens eine rein effizienzorientierte sowie tierschutzorientierte Strategien, die darauf ausgelegt sind, beim Planen einer Route auch Fluchtmöglichkeiten für sich eventuell auf der Fläche aufhaltende Tiere berücksichtigen. Diese Strategien können tierart- oder tiergruppenspezifisch sein, um etwa unterschiedlichem Fluchtverhalten von Vögeln, Schalen- oder Schwarzwild Rechnung zu tragen; sie können auch jahreszeitenspezifisch sein, um Verhaltensunterschiede in der Paarungszeit, zur Zeit der Jungenaufzucht etc. zu berücksichtigen. Unter diesen Strategien wählt der Rechner 1 zunächst eine, die der aktuellen Jahreszeit und Tieren entspricht, mit deren Anwesenheit auf der Fläche, z.B. aufgrund früherer Sichtungen, zu rechnen ist.

Fig. 2a zeigt in einer Kartendarstellung die Fläche 6 und angrenzende Flächenstücke. Eines der angrenzenden Flächenstück 7 ist ein Waldstück, diesem gegenüber liegen ein Fahrweg 8 und dahinter ein weiteres Waldstück 9. Weitere angrenzende Flächenstücke sind z. B. Felder 10, 11.

Bei Verfolgung der rein effizienzorientierten Strategie könnte ein Ergebnis der Routenplanung durch den Rechner 1 z.B. sein, dass eine Route für eine der Arbeitsmaschinen 4 zunächst entlang aller Grenzen der Fläche 6 verläuft, um rings um einen noch unbearbeiteten Kernbereich der Fläche 6 Wendeplatz zu schaffen, und dass anschließend die Route auf dem Kernbereich hin und her verläuft, um diesen Streifen für Streifen zu bearbeiten. Da durch die anfängliche Bearbeitung entlang der Grenzen Tieren auf der Fläche 6 die Möglichkeit genommen ist, ungesehen zu entweichen, ist die Wahrscheinlichkeit hoch, dass diese im Laufe der Bearbeitung im noch unbearbeiteten Rest der Fläche zusammengedrängt werden und schließlich einem Kontakt mit der Maschine nicht mehr ausweichen können.

In einer tierschutzorientierten Strategie ermittelt der Rechner 1 zunächst anhand von Informationen der Datenbanken 2, 3, welche Arten von Flächenstücken rings um die zu bearbeitende Fläche 6 vorhanden sind, und deren Eignung als Zuflucht für Tiere. Das Waldstück 7 ist gut geeignet, die Felder 10, 11 weniger, zum einen weil sie - insbesondere für größere Tiere - eventuell nicht genug Deckung bieten, zum andern weil die Tiere dort Schäden verursachen könnten. Das Waldstück 9 wäre zwar an sich geeignet, doch ist wegen fehlender Deckung auf dem Fahrweg 8 damit zu rechnen, dass die Tiere nicht bereitwillig dorthin wechseln werden. Die von der Strategie ermittelte Route sieht daher vor, wie in Fig. 2a gezeigt die Fläche 6 zunächst nur entlang ihrer Grenzen zu den benachbarten Feldern 10, 11 zu bearbeiten und so offene Randstreifen 12 zu schaffen. Durch die damit verbundene Ruhestörung wird den Tieren Anlass gegeben, die Fläche 6 zu verlassen; gleichzeitig wird ein Entweichen zu den Feldern 10, 11 unattraktiv gemacht, so dass mit einer Abwanderung in erster Linie zum Waldstück 7 zu rechnen ist.

In einer zweiten, eventuell zeitlich verzögerten Phase der Bearbeitung sieht die Route vor, dass sich die Arbeitsmaschine 4 von der Seite des Fahrwegs 8 aus auf der Fläche 6 vorarbeitet, indem sie wie in Fig. 2b gezeigt jeweils zum Rand des Waldstücks 7 in etwa parallele Spuren 13 bearbeitet und zwischen zwei Spuren 13 auf einem der Randstreifen 12 wendet. Durch die stets von derselben Seite herrührende, aber langsam vorrückende Störung werden diejenigen Tiere im noch unbearbeiteten Teil der Fläche 6, die nicht bereits durch das Bearbeiten der Randstreifen 12 vertrieben worden sind, langsam zum Waldstück 7 abgedrängt.

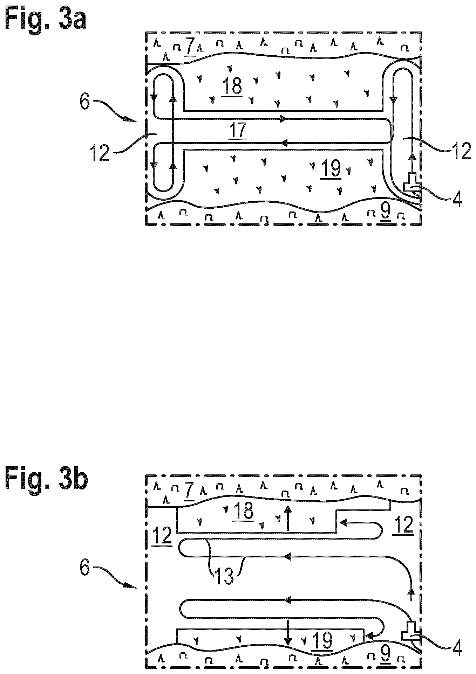

Wenn die Maschine 4 autonom ist, kann die vom Rechner 1 geplante Route von ihr auf der Fläche 6 ohne weitere Intervention durch einen Fahrer abgefahren werden. In dem Fall, dass die Maschine 4 einen Fahrer hat, kann vorgesehen werden, dass die geplante Route auf einem Display 14 ihres Bordcomputers 5 in einer Darstellung entsprechend den Figs. 2a, b und 3a, b, dem Fahrer angezeigt wird. Der Fahrer kann daraufhin die vorgeschlagene Route billigen und die Maschine 4 die Route daraufhin autonom abfahren lassen, oder er kann sie selber manuell abfahren. Darüber hinaus hat der Fahrer die Möglichkeit, die vorgeschlagene Route zu verwerfen, wenn er sie für unzweckmäßig hält. Der Bedarf hierfür kann sich ergeben, wenn die Daten über die angrenzenden Flächenstücke 7-11, die dem Rechner 1 zur Verfügung gestanden haben, unvollständig oder nicht aktuell waren, beispielsweise weil das Waldstück 7 zwischenzeitlich abgeholzt worden ist oder ein Zaun einen angenommenen Fluchtweg blockiert. In diesem Fall kann der Fahrer auf der ihm auf dem Display 14 angezeigten Karte einen alternativen Fluchtweg vorgeben, etwa indem er für die vom Rechner 1 zugrundegelegte Fluchtrichtung repräsentative Pfeile 15 löscht und durch Pfeile 16 in Richtung eines von ihm als besser geeignet beurteilten Fluchtwegs ersetzt, hier z.B. in Richtung des benachbarten Feldes 11, und der Rechner 1 erstellt eine neue Routenplanung für die Fläche 6 unter Verwendung derselben Strategie wie zuvor, aber basierend auf einer durch die Eingabe des Fahrers veränderten Bewertung der Eignung der angrenzenden Flächenstücke als Zuflucht für die Tiere.

Fig. 3a und b zeigen ein zweites Beispiel einer Routenplanung. Hier ist die zu bearbeitende Fläche an zwei Seiten von als Zuflucht geeigneten Waldstücken 7, 9 begrenzt, aber es fehlt ein Fahrweg, über den an verschiedenen Punkten ein Einstieg auf die Fläche möglich ist. Die Routenplanung sieht daher zunächst vor, an einer Seite der Fläche 6 einen sich vom einen Waldstück zum anderen erstreckenden Randstreifen 12 freizulegen, dann einmal mittig über die Fläche zu fahren, um einen freien Mittelstreifen 17 zu schaffen, und einen weiteren Randstreifen 12 auf der gegenüberliegenden Seite der Fläche 6 zu schaffen. So werden zwei unbearbeitete Teilflächen 18, 19 erhalten, von denen jede Anschluss an ein Waldstück hat, in das sich die Tiere zurückziehen können bzw. in das sie allmählich verdrängt werden, wenn die Maschine 11 sich vom Mittelstreifen 17 her schrittweise wie in Fig. 3b gezeigt zu den Waldstücken vorarbeitet.

### Bezugszeichen

- 1: Rechner
- 2: Datenbank
- 3: Datenbank
- 4: Arbeitsmaschine
- 5: Bordcomputer
- 6: landwirtschaftliche Fläche
- 7: Waldstück
- 8: Fahrweg
- 9: Waldstück
- 10: Feld
- 11: Feld
- 12: Randstreifen
- 13: Spur
- 14: Display
- 15: Pfeil
- 16: Pfeil
- 17: Mittelstreifen
- 18: Teilfläche
- 19: Teilfläche

## Patentansprüche

1. Assistenzsystem zur Generierung von Fahrrouten für eine oder mehrere autonome landwirtschaftliche Arbeitsmaschinen,
**dadurch gekennzeichnet, dass** ein Rechner (1) des Assistenzsystems eingerichtet ist, einen Routenplan mit einer Fahrtroute für jede der Arbeitsmaschinen (4) zur Bearbeitung einer landwirtschaftlichen Fläche (6) auf der Grundlage einer hinterlegten Strategie zu erstellen, welche direkte Umgebungsdaten der landwirtschaftlichen Fläche (6) berücksichtigt.

2. Assistenzsystem nach Anspruch 1, **dadurch gekennzeichnet, dass** die direkte Umgebungsdaten der landwirtschaftlichen Fläche (6) Eigenschaften von an die landwirtschaftliche Fläche (6) angrenzenden, nicht zu bearbeitenden Flächenstücken (7-11) betreffen.

3. Assistenzsystem nach Anspruch 1 oder 2, **dadurch gekennzeichnet, dass** die berücksichtigten Umgebungsdaten repräsentativ sind für die Eignung von an die landwirtschaftliche Fläche (6) angrenzenden Flächenstücken (7-11), als Fluchtziel eines sich auf der landwirtschaftlichen Fläche (6) aufhaltenden Tiers zu dienen, insbesondere für das Vorhandensein von Bewuchs auf dem Flächenstück und die Art des Bewuchses.

4. Assistenzsystem nach Anspruch 2 oder 3, **dadurch gekennzeichnet, dass** die Flächenstücke (7-11) wenigstens zur Zeit der Bearbeitung nicht von der Maschine (4) befahrbar sind.

5. Assistenzsystem nach einem der vorhergehenden Ansprüche, **dadurch gekennzeichnet, dass** der Rechner (1) eingerichtet ist, die direkte Umgebungsdaten von einem Benutzer und/oder von einer Datenbank (2, 3) abzufragen.

6. Assistenzsystem nach einem der vorhergehenden Ansprüche, **gekennzeichnet durch** eine Benutzerschnittstelle (14) zum Eingeben einer erwarteten Fluchtrichtung (16) durch einen Benutzer.

7. Assistenzsystem nach einem der vorhergehenden Ansprüche, **dadurch gekennzeichnet, dass** der Rechner (1) eingerichtet ist, die für die Generierung der Fahrroute zu verwendende Strategie unter mehreren hinterlegten Strategien anhand der Jahreszeit und/oder anhand einer zu schützenden Tierart und/oder anhand der Größe der landwirtschaftlichen Fläche (6) auszuwählen.

8. Assistenzsystem nach einem der vorhergehenden Ansprüche, **dadurch gekennzeichnet, dass** eine hinterlegte Strategie vorsieht, einen Teil (18, 19) der landwirtschaftlichen Fläche (6), der an ein als Deckung oder Fluchtmöglichkeit geeignetes Flächenstück angrenzt, später zu bearbeiten als einen von dem Flächenstück (7, 9) entfernten Teil (17) der landwirtschaftlichen Fläche (6).

9. Assistenzsystem nach einem der vorhergehenden Ansprüche, **dadurch gekennzeichnet, dass** eine hinterlegte Strategie vorsieht, einen zentralen Teil der landwirtschaftlichen Fläche, der an ein als Deckung oder Fluchtmöglichkeit geeignetes Flächenstück (7) angrenzt, später zu bearbeiten als den zentralen Teil flankierende Randteile (12) der landwirtschaftlichen Fläche (1).

10. Assistenzsystem nach einem der vorhergehenden Ansprüche, **dadurch gekennzeichnet, dass** eine hinterlegte Strategie vorsieht, einen zentralen Teil (17) der landwirtschaftlichen Fläche (6) früher zu bearbeiten als zwei an den zentralen Teil (17) beiderseits angrenzende Teile (18, 19).

11. Assistenzsystem nach einem der vorhergehenden Ansprüche, **dadurch gekennzeichnet, dass** eine hinterlegte Strategie vorsieht, eine Fahrtroute überwiegend parallel zu einem Rand der landwirtschaftlichen Fläche (6) zu führen, an den ein als Deckung oder Fluchtmöglichkeit geeignetes Flächenstück (7) angrenzt.

12. Assistenzsystem nach einem der vorhergehenden Ansprüche, **gekennzeichnet durch** eine Benutzerschnittstelle (14) zum Anzeigen einer von dem Rechner erstellten Fahrtroute und optional zum Editieren der angezeigten Fahrtroute durch einen Benutzer.
